# FASCICULE DE BREVET EUROPEEN

(11) **EP 3 527 613 B1**
(45) Date de publication et mention de la délivrance du brevet: **07.07.2021**
(21) Numéro de dépôt: 19156306.3
(22) Date de dépôt: 08.02.2019
(51) Int. Cl.: B29B 17/02, C08J 11/14, B29K 105/06, C08L 101/00

(54) **PROCÉDÉ DE DÉCOMPOSITION D'UN MATÉRIAU COMPOSITE À MATRICE ORGANIQUE RENFORCÉE PAR DES FIBRES, ET APPAREILLAGE POUR SA MISE EN OEUVRE**
VERFAHREN ZUR ZERSETZUNG VON VERBUNDMATERIAL MIT DURCH FASERN VERSTÄRKTER ORGANISCHER MATRIX, UND GERÄT FÜR DIE UMSETZUNG DIESES VERFAHRENS
METHOD FOR DECOMPOSITION OF A COMPOSITE MATERIAL WITH ORGANIC MATRIX REINFORCED BY FIBRES, AND APPARATUS FOR IMPLEMENTING SAME

(30) Priorité: 14.02.2018 FR 1870165
(43) Date de publication de la demande: 21.08.2019
(73) Titulaire: Extracthive, 30150 Saint-Genies-De-Comolas (FR)
(72) Inventeur: AMARAL DE OLIVEIRA, Vanessa, 88040440 Florianopolis (BR); GOETTMANN, Frédéric, 84350 COURTHEZON (FR)
(74) Mandataire: Cabinet Chaillot

(56) Documents cités:
- FR-A1- 3 037 067
- US-A- 5 772 777
- Dutscher: "Drying oven for drying and thermal treatment", , 12 juillet 2017 (2017-07-12), XP002785269, Extrait de l'Internet: URL:https://www.dutscher.com/frontoffice/p roduct?produitId=0O-65-62 [extrait le 2018-10-02]
- G. OLIVEUX ET AL.: "Current status of recycling of fibre reinforced polymers: Reviews of technologies, reuse and resulting properties", PROGRESS IN MATERIAL SCIENCE, vol. 72, 14 mars 2015 (2015-03-14), pages 61-99, XP002785270,
- JUAN LI ET AL.: "A promising strategy for chemial recycling of carbon fiber/thermoset composites: self-ccelerating decomposition in a mild oxidative system", GREEN CHEMISTRY, vol. 14, 2012, pages 3260-3263, XP002785271,
- R MORALES IBARRA ET AL: "Water and Benzyl Alcohol in Subcritical and Supercritical Conditions as means for Carbon Fiber Recovery from Thermoset Composite Materials", CONFERENCE PROCEEDINGS ARTICLE, 16 mai 2012 (2012-05-16), XP055106125,

## Description

La présente invention concerne les matériaux composites constitués par une matrice organique renforcée par des fibres (FRP - « Fiber Reinforced Plastics »). La matrice organique est le liant qui assure la cohésion du matériau composite et la transmission des efforts vers le renfort que forment les fibres, lesquelles assurent la tenue mécanique dudit matériau composite.

La présente invention porte sur un nouveau procédé de décomposition d'un matériau composite à matrice organique renforcée par des fibres ainsi que sur un appareillage pour la mise en œuvre de ce procédé.

Les pièces en un tel matériau composite sont couramment utilisées quand une forte rigidité liée à la légèreté est nécessaire. Ces deux caractéristiques primordiales permettent leur utilisation dans une large gamme d'applications comme dans l'industrie aérospatiale, l'industrie automobile, le génie civil, les éoliennes, le bâtiment, le nautisme, l'agriculture, les loisirs, les articles de sport, le sanitaire, entre autres.

Les composites à base de fibres de carbone (CFRP - « Carbon Fiber Reinforced Plastics ») sont des matériaux à forte intensité énergétique de production, d'où leur haute valeur de vente dans le marché actuel. Il n'en reste pas moins qu'en raison de leurs caractéristiques uniques, malgré leur coût élevé, ils sont de plus en plus utilisés en Europe au point qu'ils doivent à l'heure actuelle être importés à 78 %. Les CFRP constituent 52 % de la matière présente dans l'Airbus A350 XWB, par exemple, comprenant les longerons d'aile et les composants du fuselage. Un autre exemple est la BMW I8 qui contient 136 kg de CFRP.

L'augmentation de la demande de pièces faites de tels matériaux composites à base de fibres conduit à la génération de grandes quantités de résidus de production et de produits de fin de vie. A ce propos, on peut mentionner l'exemple particulièrement frappant de la gestion des pales d'éoliennes en fin de vie. En prenant en compte le nombre d'éoliennes installées aujourd'hui, et leur durée de vie moyenne d'environ 20 ans, la récupération des fibres de verre et des fibres de carbone qui entrent dans la composition des pales peut être la solution à la mise en décharge.

Tous ces facteurs montrent que la situation actuelle de la gestion des résidus de production et des rebuts en fin de vie des pièces demande un procédé de recyclage adapté, visant notamment à récupérer les fibres qui les composent.

Actuellement, le recyclage des matériaux composites à matrice organique renforcée par des fibres peut être effectué par voie mécanique (1), par voie thermique (2), par fluides quasi- et super critiques (3) et par solvolyse à basse température (4).
(1) La voie mécanique est utilisée pour des composites à base de fibres et d'une résine thermoplastique. Dans ce procédé, les pièces composites sont broyées en pièces plus petites, ces dernières étant utilisées comme charge ou renfort dans d'autres produits. La récupération de la fibre elle-même n'est pas possible. La valorisation du produit recyclé, dans lequel les fibres de récupération sont noyées dans de la résine usée, ne permet pas des applications à forte valeur ajoutée.
(2) La pyrolyse est l'un des procédés utilisés aujourd'hui à l'échelle industrielle pour la récupération des fibres de carbone de composites à base de tels fibre. Dans ce procédé, la résine est brûlée à des températures généralement supérieures à 600 °C, et les fibres sont ensuite récupérées. Cependant, les hautes températures nécessaires pour l'élimination de la résine rendent le procédé cher, impossible à envisager pour le recyclage de composites notamment à base de fibres de verre. Par ailleurs, la pyrolyse détruit l'ensimage des fibres en raison des hautes températures, et la conservation de l'ensimage est nécessaire à la réalisation de nouvelles pièces. Egalement, aux hautes températures appliquées, les propriétés mécaniques des fibres recyclées sont largement affectées, perdant notamment plus de 30 % de résistance à la traction.
(3) Les fluides quasi- ou supercritiques permettent d'effectuer une dégradation de la résine sur la base de leurs caractéristiques uniques à haute température et à haute pression. Le fluide le plus utilisé est l'eau dans les conditions supercritiques de plus de 374 °C et 2,21 x 10⁷ Pa (22,1 bar), le cas échéant avec des additifs et catalyseurs choisis notamment parmi les alcools, NaOH et KOH. Les alcools ou l'acétone peuvent être utilisés avec l'avantage d'avoir besoin d'une plus petite pression à la même température que l'eau pour atteindre les conditions supercritiques. La solvolyse en fluides supercritiques présente l'inconvénient du coût élevé d'un réacteur dans lequel il faut faire régner les hautes pressions et les hautes températures des conditions quasi- et supercritiques. Cet inconvénient s'ajoute à celui de la dégradation de la couche d'ensimage des fibres récupérées, rendant nécessaire un post-traitement pour reformer l'ensimage des fibres.
(4) La solvolyse à basse température - inférieure à 200 °C - utilise des milieux solvants acides, tels que l'acide nitrique et l'acide sulfurique, avec des catalyseurs pour la dégradation de la résine et la récupération des fibres. Ce procédé permet la récupération des oligomères qui forment la résine. Dans la majorité des études publiées, les solutions utilisées sont très dangereuses et la majorité des combinaisons solvant + catalyseur fonctionne sur un type limité de résine.

On peut donc voir que chacune des technologies (1) à (4) décrites ci-dessus présente des inconvénients qui font à la fois qu'elles ne permettent pas une valorisation adéquate du produit recyclé et elles sont peu intéressantes pour une mise à l'échelle industrielle.

La présente invention a pour but de remédier à ces inconvénients en proposant un procédé de dégradation de la résine permettant de récupérer les fibres intactes ou quasi-intactes et si on le souhaite la résine dégradée (dépolymérisée) en ses monomères/oligomères constitutifs en offrant dans tout la mesure du possible les avantages particuliers de pouvoir être conduit à une température relativement peu élevée et pendant une durée relativement courte et d'éviter la production de sous-produits solides, facilitant ainsi le lavage des fibres récupérées.

La présente invention a donc pour objet un procédé de décomposition d'un matériau composite consistant en une matrice de résine organique renforcée par des fibres pour récupérer lesdites fibres et le cas échéant les produits de dégradation de ladite matrice de résine, ladite résine étant une résine contenant des liaisons C-N et/ou C-O, caractérisé par le fait que l'on fait agir sur ledit matériau composite une phase vapeur formée d'acide acétique et de chlorure d'hydrogène jusqu'à ce que les fibres se détachent des produits de dégradation de ladite matrice de résine ainsi formés et que l'on sépare ces derniers desdites fibres.

On peut faire agir ladite phase vapeur sur ledit matériau composite placé sous forme d'au moins un morceau sur une plaque perforée, les produits de dégradation sous forme capable de s'écouler tombant à travers les perforations de ladite plaque et les fibres séparées étant récupérées sur ladite plaque perforée.

On peut conduire l'action de dégradation de la matrice de résine dans un réacteur à deux étages séparés par ladite plaque perforée, l'acide acétique et de l'acide chlorhydrique étant placés dans le fond du réacteur et chauffés pour fournir la phase vapeur requise et la matrice de résine étant placée sous forme d'au moins un morceau sur ladite plaque perforée, les produits de dégradation de la matrice de résine tombant dans le fond dudit réacteur.

On peut séparer par distillation l'acide acétique et l'acide chlorhydrique des produits de dégradation tombés dans le fond du réacteur, et le cas échéant on peut recycler l'acide acétique et l'acide chlorhydrique à la dégradation de la matrice de résine.

On peut conduire l'action de dégradation à une température de 100 à 450 °C à pression autogène, notamment de 150 à 200 °C, en particulier à 180 °C.

On peut conduire l'action de dégradation à la pression atmosphérique ou à une pression pouvant aller jusqu'à 40 bar (4 MPa), étant notamment de 11 bar (1,1 MPa), ladite pression pouvant être une pression autogène dans le cas où l'on opère dans un réacteur fermé.

En augmentant la pression, il n'est pas exclu que la même efficacité de dégradation de la résine puisse être atteinte à des températures plus basses.

Le rapport en masse acide acétique / acide chlorhydrique peut être de 1/1 à 30/1, étant notamment de 16/1, l'acide acétique étant utilisé notamment à raison de 4,7 g pour 1 g de matériau composite ayant un taux de fibres pouvant notamment aller de 10 à 70 % en poids, l'acide acétique et l'acide chlorhydrique pouvant être introduits à l'état liquide en milieu aqueux avec notamment un rapport en masse eau / acide acétique de 0,1/1 à 2/1.

On peut conduire l'action de dégradation pendant une durée de 2 à 48 h, notamment de 5 à 7 h.

La résine doit être une résine contenant des liaisons C-N et/ou C-O, comme par exemple une résine époxy, polyamide, polyuréthane, polyétheréthercétone, cyanate ester ou polyester.

Les fibres peuvent être choisies parmi les fibres de carbone, les fibres de verre et leurs mélanges.

On peut laver les fibres recyclées, notamment à l'aide d'un jet d'eau.

Les exemples suivants illustrent la présente invention sans toutefois en limiter la portée. Dans ces exemples, les parties et pourcentages sont indiqués en poids sauf indication contraire.

Sur les dessins :
- la Figure 1 est une vue en coupe schématique du réacteur utilisé dans le procédé de décomposition selon la présente invention, le réacteur comportant deux étages séparés par une grille perforée ;
- la Figure 2 est un spectre Raman représentant à la fois le spectre obtenu pour une fibre de carbone contenue dans une matière composite avant et après dégradation de la matrice de résine ; et
- les Figures 3 à 6 sont des images prises par microscope électronique à balayage et montrant l'état de surface des fibres après leur récupération.

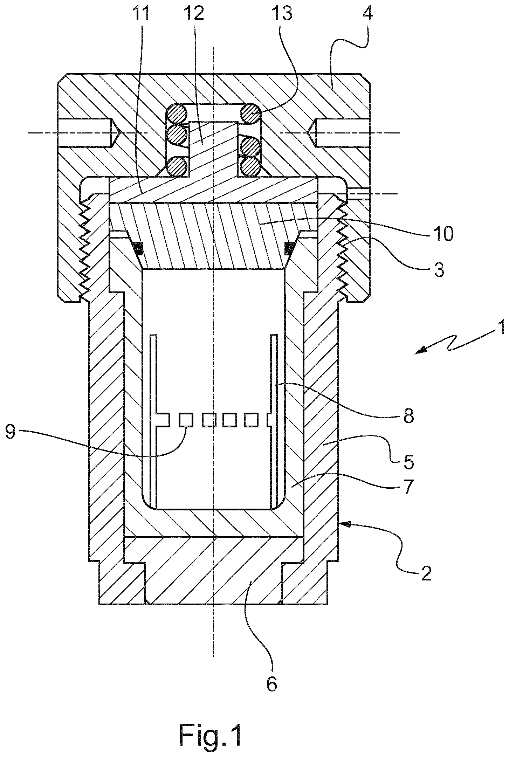

Le réacteur 1, tel que représenté sur la Figure 1, consiste en un autoclave formé par un réceptacle 2 en acier apte à être fermé hermétiquement par vissage en 3 par un couvercle 4 résistant à la pression.

Le réceptacle 2, de forme générale cylindrique, est formé par une paroi latérale cylindrique 5 raccordée à un fond 6.

Dans le réceptacle 2, est placé un creuset cylindrique 7 en Téflon qui vient s'accrocher en partie haute par un décrochement vers l'extérieur de sa paroi latérale sur une surface annulaire formée intérieurement à la paroi 5.

Dans le creuset 7, est introduit verticalement un élément tubulaire 8 en Téflon qui vient se situer en regard de la surface intérieure de la paroi latérale du creuset 7 et dont l'espace intérieur est divisé en une région inférieure et une région supérieure par une plaque horizontale 9 d'un seul tenant avec l'élément tubulaire 8. La plaque 9 est une plaque perforée.

Le creuset 7 est apte à être fermé hermétiquement par un bouchon 10.

Le couvercle 4 comporte intérieurement une plaque de fermeture 11 qui est apte à venir en appui sur le bouchon 10 et qui porte, à l'extérieur, une protubérance centrale cylindrique 12, autour de laquelle vient se placer un ressort 13, lequel vient en appui par une extrémité sur la plaque 11, et par l'autre contre le fond d'une cavité cylindrique formée dans la surface intérieure du couvercle 2. On assure ainsi une fermeture totalement étanche.

### Exemples 1 à 17

### Mode opératoire général

On a conduit l'expérimentation dans le réacteur autoclave 1.

Dans le fond du creuset 7 de l'autoclave 1, on a placé 60 ml d'acide acétique (pur à 90 %) et 8 ml d'acide chlorhydrique (pur à 37 %).

Sur la plaque perforée 9, on a placé un morceau de 12 g d'une pièce en matière composite en fin de vie ayant une matrice chargée de fibres.

On a fermé le réacteur 1 et chauffé à 180 °C pendant 6 heures.

A la fin du chauffage, après ouverture du réacteur 1, on a récupéré les fibres que l'on a lavées au jet d'eau et que l'on a séchées pendant 12 heures à 60 °C.

### Résultats

Les résultats sont rapportés dans le Tableau 1.

**Tableau 1**

| Exemple | Matériau composite | | Masse initiale du matériau (g) | Masse du matériau après dégradation (g) | Perte de masse (%) |
|---|---|---|---|---|---|
| | Résine | Fibres | | | |
| 1 | Epoxy | Carbone | 11,54 | 7, 90 | 31,54 |
| 2 | Polyétheréthercétone | Carbone | 10, 90 | 7,54 | 30, 82 |
| 3 | Epoxy | Carbone | 11, 96 | 7, 9 | 33,30 |
| 4 | Cyanate ester | Carbone | 12,23 | 7, 95 | 34, 90 |
| 5 | Epoxy | Verre | 13, 80 | 5,57 | 59, 63 |
| 6 | Polyamide 6 | Carbone | 12, 04 | 7,16 | 40,53 |
| 7 | Epoxy | Verre | 13, 80 | 5,57 | 59, 64 |

Le diamètre nominal des fibres récupérées a été mesuré par microscopie électronique à balayage (MEB) et varie entre 6,1 et 7 microns.

### Exemple 8 : Caractérisation de fibres obtenues selon le mode opératoire général

Une analyse par spectroscopie Raman a été effectuée sur des fibres obtenues par le traitement selon le mode opératoire général pour comparer les liaisons C-C des fibres de carbone initiale et des fibres de carbone récupérées, les caractéristiques de pic comme la position, l'intensité et la largeur à mi-hauteur étant comparées. Toutes les fibres de carbone ont présenté deux pics Raman principaux :
- l'un se rapportant au carbone graphitique (G) à 1590 cm⁻¹ ; et
- l'autre associé au désordre structural du réseau cristallin (D) détecté à 1360 cm⁻¹.

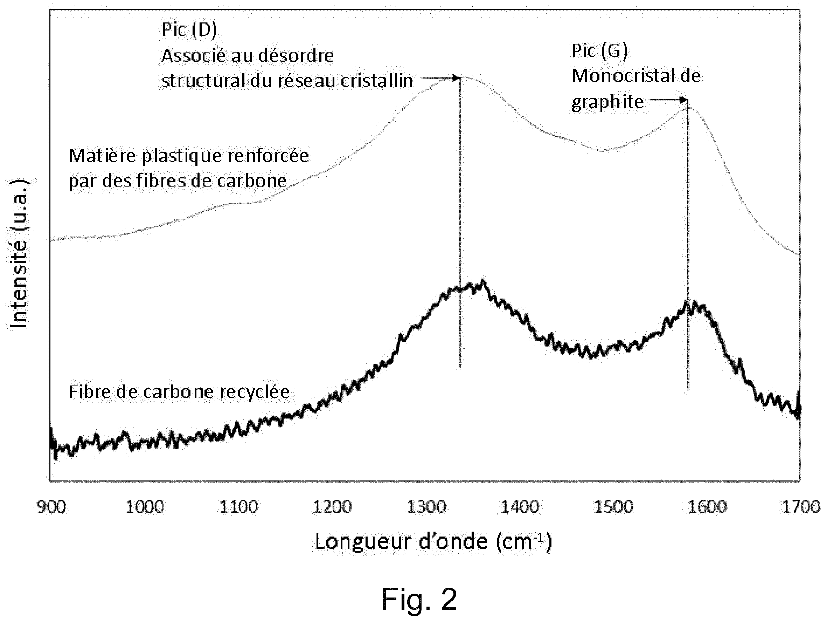

Les deux spectres Raman obtenus sont représentés sur la Figure 2 du dessin annexé. Ils montrent les pics G et D distincts attendus pour ces matériaux. Leur comparaison permet d'affirmer qu'aucun endommagement conséquent des fibres dû à l'opération de dégradation selon l'invention n'a pu être détecté dans les fibres récupérées.

### Exemple 9 : Caractérisation de différentes fibres obtenues selon le mode opératoire général

Une analyse par microscopie électronique à balayage (MEB) a été effectuée sur les fibres recyclées obtenues selon le mode opératoire général afin de caractériser leur morphologie et leur aspect.

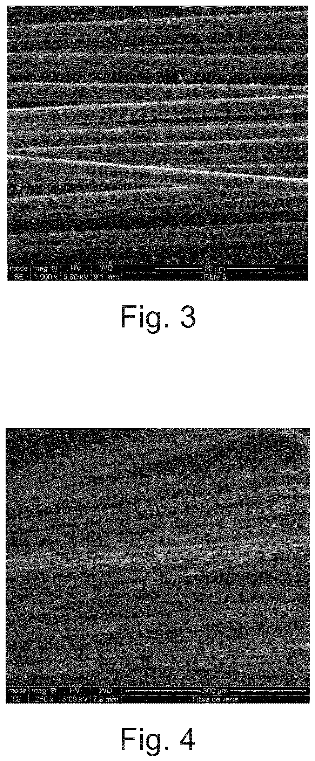

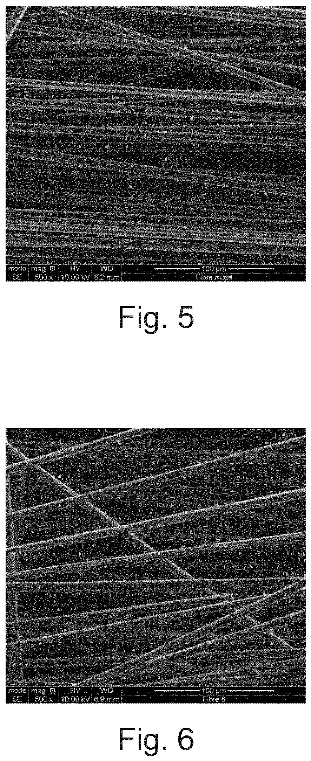

Les Figures 3 à 6 montrent les photographies MEB de ces différentes fibres. Très peu de traces de résine peuvent être observées dans les images.

## Revendications

1. Procédé de décomposition d'un matériau composite consistant en une matrice de résine organique renforcée par des fibres pour récupérer lesdites fibres et le cas échéant les produits de dégradation de ladite matrice de résine, ladite résine étant une résine contenant des liaisons C-N et/ou C-O, **caractérisé par le fait que** l'on fait agir sur ledit matériau composite une phase vapeur formée d'acide acétique et de chlorure d'hydrogène jusqu'à ce que les fibres se détachent des produits de dégradation de ladite matrice de résine ainsi formés et que l'on sépare ces derniers desdites fibres.

2. Procédé selon la revendication 1, **caractérisé par le fait que** l'on fait agir ladite phase vapeur sur ledit matériau composite placé sous forme d'au moins un morceau sur une plaque perforée, les produits de dégradation sous forme capable de s'écouler tombant à travers les perforations de ladite plaque et les fibres séparées étant récupérées sur ladite plaque perforée.

3. Procédé selon la revendication 2, **caractérisé par le fait que** l'on conduit l'action de dégradation de la matrice de résine dans un réacteur à deux étages séparés par ladite plaque perforée, l'acide acétique et de l'acide chlorhydrique étant placés dans le fond du réacteur et chauffés pour fournir la phase vapeur requise et la matrice de résine étant placée sous forme d'au moins un morceau sur ladite plaque perforée, les produits de dégradation de la matrice de résine tombant dans le fond dudit réacteur.

4. Procédé selon la revendication 3, **caractérisé par le fait que** l'on sépare par distillation l'acide acétique et l'acide chlorhydrique des produits de dégradation tombés dans le fond du réacteur, et que le cas échéant on recycle l'acide acétique et l'acide chlorhydrique à la dégradation de la matrice de résine.

5. Procédé selon l'une des revendications 1 à 4, **caractérisé par le fait que** l'on conduit l'action de dégradation à une température de 100 à 450 °C à pression autogène, notamment de 150 à 200 °C, en particulier à 180 °C.

6. Procédé selon l'une des revendications 1 à 5, **caractérisé par le fait que** l'on conduit l'action de dégradation à la pression atmosphérique ou à une pression pouvant aller jusqu'à 40 bar (4 MPa), étant notamment de 11 bar (1,1 MPa), ladite pression pouvant être une pression autogène dans le cas où l'on opère dans un réacteur fermé.

7. Procédé selon l'une des revendications 1 à 6, **caractérisé par le fait que** le rapport en masse acide acétique / acide chlorhydrique est de 1/1 à 30/1, étant notamment de 16/1, l'acide acétique étant utilisé notamment à raison de 4,7 g pour 1 g de matériau composite ayant un taux de fibres pouvant notamment aller de 10 à 70 % en poids, l'acide acétique et l'acide chlorhydrique étant introduits à l'état liquide en milieu aqueux avec notamment un rapport en masse eau / acide acétique de 0,1/1 à 2/1.

8. Procédé selon l'une des revendications 1 à 7, **caractérisé par le fait que** l'on conduit l'action de dégradation pendant une durée de 2 à 48 h, notamment de 5 à 7 h.

9. Procédé selon l'une des revendications 1 à 8, **caractérisé par le fait que** la résine est une résine époxy, polyamide, polyuréthane, polyétheréthercétone, cyanate ester ou polyester.

10. Procédé selon l'une des revendications 1 à 9, **caractérisé par le fait que** les fibres sont choisies parmi les fibres de carbone, les fibres de verre et leurs mélanges.

11. Procédé selon l'une des revendications 1 à 10, **caractérisé par le fait qu'**on lave les fibres recyclées, notamment à l'aide d'un jet d'eau.

## Patentansprüche

1. Verfahren zum Zersetzen eines Verbundmaterials, das aus einer faserverstärkten organischen Harzmatrix besteht, um die Fasern und gegebenenfalls Abbauprodukte der Harzmatrix wiederzugewinnen, wobei das Harz ein C-N- und/oder C-O-Bindungen enthaltendes Harz ist, **dadurch gekennzeichnet, daß** man eine Dampfphase aus Essigsäure und Chlorwasserstoff auf das Verbundmaterial einwirken läßt, bis die Fasern von den so gebildeten Abbauprodukten der Harzmatrix abgelöst und letztere von den Fasern getrennt sind.

2. Verfahren nach Anspruch 1, **dadurch gekennzeichnet, daß** man die Dampfphase auf das in mindestens einem Stück auf einer Lochplatte angeordnete Verbundmaterial einwirken lässt, wobei die Abbauprodukte in fließfähiger Form durch die Perforationen der Platte fallen und die abgetrennten Fasern auf der Lochplatte wiedergewonnen werden.

3. Verfahren nach Anspruch 2, **dadurch gekennzeichnet, daß** der Abbau der Harzmatrix in einem zweistufigen Reaktor durchgeführt wird, wobei beide Stufe durch die perforierte Platte getrennt sind, wobei Essigsäure und Salzsäure im Boden des Reaktors angeordnet und erhitzt werden, um die erforderliche Dampfphase bereitzustellen, und die Harzmatrix als mindestens ein Stück auf der perforierten Platte angeordnet wird, wobei die Abbauprodukte der Harzmatrix zum Boden des Reaktors fallen.

4. Verfahren nach Anspruch 3, **dadurch gekennzeichnet, daß** Essigsäure und Salzsäure von den Abbauprodukten, die auf den Boden des Reaktors gefallen sind, durch Destillation abgetrennt werden, und daß Essigsäure und Salzsäure gegebenenfalls zum Abbau der Harzmatrix zurückgeführt werden.

5. Verfahren nach einem der Ansprüche 1 bis 4, **dadurch gekennzeichnet, daß** der Abbauvorgang bei einer Temperatur von 100 bis 450°C unter autogenem Druck, insbesondere 150 bis 200°C, insbesondere 180°C durchgeführt wird.

6. Verfahren nach einem der Ansprüche 1 bis 5, **dadurch gekennzeichnet, daß** der Abbauvorgang bei Atmosphärendruck oder bei einem Druck von bis zu 40 bar (4 MPa), insbesondere 11 bar (1,1 MPa), durchgeführt wird, wobei dieser Druck ein autogener Druck sein kann, wenn der Vorgang in einem geschlossenen Reaktor durchgeführt wird.

7. Verfahren nach einem der Ansprüche 1 bis 6, **dadurch gekennzeichnet, daß** das Massenverhältnis Essigsäure/Salzsäure 1:1 bis 30:1, insbesondere 16:1 beträgt, wobei die Essigsäure insbesondere in einer Menge von 4,7 g pro 1 g Verbundmaterial mit einem Fasergehalt, der insbesondere im Bereich von 10 bis 70 Gew.-% liegen kann, eingesetzt wird, wobei die Essigsäure und die Salzsäure in flüssigem Zustand in einem wässrigen Medium mit einem Massenverhältnis von insbesondere Wasser/Essigsäure von 0,1:1 bis 2:1 eingebracht werden.

8. Verfahren nach einem der Ansprüche 1 bis 7, **dadurch gekennzeichnet, daß** der Abbauvorgang über einen Zeitraum von 2 bis 48 h, insbesondere 5 bis 7 h, durchgeführt wird.

9. Verfahren nach einem der Ansprüche 1 bis 8, **dadurch gekennzeichnet, daß** das Harz ein Epoxid-, Polyamid-, Polyurethan-, Polyetheretherketon-, Cyanatester- oder Polyesterharz ist.

10. Verfahren nach einem der Ansprüche 1 bis 9, **dadurch gekennzeichnet, daß** die Fasern aus Kohlenstofffasern, Glasfasern und Mischungen davon ausgewählt werden.

11. Verfahren nach einem der Ansprüche 1 bis 10, **dadurch gekennzeichnet, daß** die rezyklierten Fasern gewaschen werden, insbesondere mit einem Wasserstrahl.

## Claims

1. A method of decomposing a composite material consisting of a fiber-reinforced organic resin matrix in order to recover said fibers and optionally degradation products of said resin matrix, said resin being a resin containing C-N and/or C-O bonds, **characterized in that** a vapour phase of acetic acid and hydrogen chloride is caused to act on said composite material until the fibers are detached from the thus formed degradation products of said resin matrix and the latter are separated from said fibers.

2. The method according to claim 1, **characterized by** causing said vapour phase to act on said composite material placed in at least one piece on a perforated plate, the degradation products in flowable form falling through the perforations of said plate and the separated fibers being recovered on said perforated plate.

3. The method according to claim 2, **characterized in that** the degradation action of the resin matrix is conducted in a reactor having two stages separated by said perforated plate, acetic acid and hydrochloric acid being placed in the bottom of the reactor and heated to provide the required vapour phase, and the resin matrix being placed as at least one piece on said perforated plate, the degradation products of the resin matrix falling to the bottom of said reactor.

4. The method according to claim 3, **characterized in that** acetic acid and hydrochloric acid are distilled off from the degradation products that have fallen to the bottom of the reactor, and that acetic acid and hydrochloric acid are optionally recycled to the degradation of the resin matrix.

5. The method according to anyone of claims 1 to 4, **characterized in that** the degradation action is carried out at a temperature of 100 to 450°C under autogenous pressure, in particular of 150 to 200°C, in particular 180°C.

6. The method according to anyone of claims 1 to 5, **characterized in that** the degradation action is carried out at atmospheric pressure or at a pressure of up to 40 bar (4 MPa), being in particular of 11 bar (1.1 MPa), the said pressure being able to be an autogenous pressure in the case of operation in a closed reactor.

7. The method according to anyone of claims 1 to 6, **characterized in that** the acetic acid/hydrochloric acid mass ratio is from 1:1 to 30:1, being in particular 16:1, the acetic acid being used in particular in an amount of 4.7 g per 1 g of composite material having a fiber content which can range in particular from 10 to 70% by weight, the acetic acid and the hydrochloric acid being introduced in the liquid state in an aqueous medium with in particular a water/acetic acid mass ratio of 0.1:1 to 2:1.

8. The method according to anyone of the claims 1 to 7, **characterized in that** the degradation action is carried out for a period of 2 to 48 h, in particular of 5 to 7 h.

9. The method according to anyone of claims 1 to 8, **characterized in that** the resin is an epoxy, polyamide, polyurethane, polyetheretherketone, cyanate ester or polyester resin.

10. The method according to anyone of claims 1 to 9, **characterized in that** the fibers are selected from carbon fibers, glass fibers and mixtures thereof.

11. The method according to anyone of the claims 1 to 10, **characterized in that** the recycled fibers are washed, in particular by means of a water jet.
